# EUROPÄISCHE PATENTANMELDUNG

(11) **EP 0 588 016 A1**
(43) Veröffentlichungstag der Anmeldung: **23.03.1994**
(21) Anmeldenummer: 93111423.5
(22) Anmeldetag: 16.07.1993
(51) Int. Cl.: C03B 3/02

(54) **Verfahren zum Vorwärmen von einem Gemenge zur Glaserzeugung, insbesondere in Mischung mit Glasscherben**

(30) Priorität: 10.09.1992 DE 4230232
(71) Anmelder: Beteiligungen Sorg GmbH & Co. KG, D-97816 Lohr (DE)
(72) Erfinder: Pieper, Helmut, Dipl.-Ing., D-97816 Lohr/Main (DE); Bucar, Matjaz, D-97783 Karsbach (DE)
(74) Vertreter: Schulze Horn, Stefan, Dipl.-Ing. M.Sc.

(57) **Zusammenfassung**

Verfahren zum Vorwärmen von einem Gemenge zur Glaserzeugung, insbesondere in Mischung mit Glasscherben, wobei mindestens ein langgestreckter, etwa waagerecht angeordneter Trog (11, 21) vorgesehen wird, wobei das Gut auf ein Ende des Troges gegeben wird, in dem eine an sich bekannte Kratzerkette (12) über mindestens zwei beabstandete Kettenräder (13, 13'), von denen mindestens eines antreibbar ist, so umläuft, daß mindestens ein Kratzerkettentrum etwa über die Längsausdehnung des Troges (11, 21) gleitet, wobei das Gut von dem Kratzerkettentrum entlang der Längsausdehnung des Troges zu dessen anderen Ende gefördert und aus dem Trog abgeführt wird, und wobei das Gut bei der Förderung in dem Trog (11, 21) erwärmt wird.

Vorrichtung zur Durchführung des Verfahrens mit mindestens einem langgestreckten, etwa waagerecht angeordneten Trog (11, 21), mit einer an sich bekannten endlosen Kratzerkette (12), die über mindestens zwei beabstandete Kettenräder (13, 13'), von denen mindestens eines antreibbar ist, so umläuft, daß mindestens ein Kratzerkettentrum etwa über die Längsausdehnung des Troges (11, 21) gleitend in Eingriff bringbar ist, und mit Mitteln zur Erwärmung des in dem Trog geförderten Gutes.

## Beschreibung

Die vorliegende Erfindung betrifft ein Verfahren zum Vorwärmen von einem Gemenge zur Glaserzeugung, insbesondere in Mischung mit Glasscherben und eine Vorrichtung zur Durchführung des Verfahrens.

Die Vorwärmung von Gemenge und Scherben ist in der Glasindustrie noch nicht sehr verbreitet, weil bei der Realisierung erhebliche Probleme auftreten.

Scherben allein vorsuwärmen ist relativ einfach, weil die Scherben entweder direkt oder indirekt beheizt werden können, ohne daß es zu Verbackungen oder Förderschwierigkeiten kommt.

Bei der Vorheizung des Gemenges gibt es zwei erhebliche Probleme:
Das eine ist, daß die Soda bei einem Überschuß an Wasser zum Hydratisieren neigt und damit erhebliche Verklumpungen mit dem Gemenge auftreten, die die Förderbarkeit stark beeinträchtigen.

Zum anderen hat das Gemenge sehr viele Feinbestandteile, die in direktem Kontakt mit dem Abgas zu einer starken Verstaubung im Abgas und einer Entmischung des Gemenges führen.

Eine indirekte Vorwärmung des Gemenges in einem geschlossenen Behälter verbietet sich, weil dann der entstehende Wasserdampf aus dem Gemenge nicht abgeführt werden kann und an kälteren Stellen im Gerät wieder kondensiert, was zu erheblichen Problemen führt.

Es ist die Aufgabe der vorliegenden Erfindung, ein Verfahren zum Vorwärmen von einem Gemenge zur Glaserzeugung, insbesondere in Mischung mit Glasscherben, zu schaffen, bei dem die vorgenannten, im Stand der Technik auftretenden Probleme nicht auftreten und mit dem das zu erwärmende Gut mit gutem Wirkungsgrad erwärmbar ist.

Es ist eine weitere Aufgabe der Erfindung, eine Vorrichtung zu schaffen, mit der das erfindungsgemäße Verfahren wirtschaftlich und zuverlässig durchführbar ist.

Die Lösung der Aufgabe gelingt mit einem Verfahren nach dem Patentanspruch 1.

Dadurch, daß mindestens ein langgestreckter, etwa waagerecht angeordneter Trog vorgesehen wird, daß das Gut auf ein Ende des Troges gegeben wird, in dem eine an sich bekannte Kratzerkette über mindestens zwei beabstandete Kettenräder, von denen mindestens eines antreibbar ist, so umläuft, daß mindestens ein Kratzerkettentrum etwa über die Längsausdehnung des Troges gleitet, daß das Gut von dem Kratzerkettentrum entlang der Längsausdehung des Troges zu dessen anderen Ende gefördert und aus dem Trog abgeführt wird und daß das Gut bei der Förderung in dem Trog erwärmt wird, wird bewirkt, daß der Wärmeübergang an das Gut durch die ständige Längs- und die dabei entstehende Umwälzbewegung durch die Kratzerkette sehr hoch wird.

Ein an sich bekannter Kratzerkettenförderer weist einen Trog auf, auf dessen Boden eine Kratzerkette, welche mit Mitnehmern aus Flachstahl bestückt ist, entlanggeführt wird. Diese Kratzerkette und die senkrecht zur Kratzerkette stehenden Mitnehmer transportieren das Gut von einem Ende des Kratzerförderers zum anderen Ende, wobei das Auslaufende zuweilen leicht ansteigt und das Gut über die Kante des Auslaufendes in einen Bunker fällt.

Die Kratzerkette und die Mitnehmer aus Flachstahl dienen dabei als Sekundärheizflächen, d.h., sie geben ihre Wärme teilweise an das Gut ab.

Zweckmäßig wird das Gut durch einen ersten Gasstrom direkt erwärmt, wobei zur Steigerung der Wirtschaftlichkeit vorteilhaft das Gut durch einen Abgasstrom aus einem Glasschmelzofen erwärmt wird.

Dieser Abgasstrom hat üblicherweise eine Temperatur von etwa 450°, nachdem er die Regeneratoren oder die Rekuperatoren verläßt. Zur Vorwärmung des Gutes hat sich eine Gegenstromführung als zweckmäßig erwiesen.

Vorteilhaft umgibt man den Trog mit einem Gehäuse, das eine Eintritts- und Austrittsöffnung für den Gasstrom aufweist.

Zur weiteren Steigerung des Wärmeüberganges ist vorgesehen, daß man das Gehäuse mit einem Mantel mit Innenwand und einer Außenwand ausführt und daß man einen zweiten Gasstrom zwischen Innenwand und Außenwand leitet zur indirekten Erwärmung des Gutes.

Dabei ist es zweckmäßig, den Abgasstrom vom Glasschmelzofen und nach dem Wärmetauscher in einen ersten Abgasstrom zur direkten Erwärmung und in einen zweiten Abgasstrom zur indirekten Erwärmung des Gutes aufzuteilen.

Als vorteilhaft hat sich dabei erwiesen, daß der zweite Abgasstrom im Kreuzgegenstrom zu der Bewegung des Gutes verläuft.

In einer vorteilhaften Weiterbildung ist vorgesehen, daß man das Volumenverhältnis zwischen erstem und zweiten Gasstrom so einstellt, daß die Verstaubung in direktem Kontakt mit dem Gut minimiert wird.

Die Bauart der erfindungsgemäßen Vorrichtung erlaubt es, die freien Querschnitte relativ groß auszuführen, so daß auch bei größeren Abgasmengen eine sehr niedrige Abgasgeschwindigkeit über dem Gut entsteht.

Über die Geschwindigkeit der Kratzerkette kann die Schichtdicke des vorzuwärmenden Gutes vorteilhaft in Abhängigkeit von der Durchsatzmenge eingestellt werden.

Um einen Falschlufteinbruch in den unter Unterdruck stehenden Vorwärmraum zu vermeiden, wird das Gut über einen kleinen Zwischenbunker, über eine vollkommen geschlossene Vibrationsrinne zugeführt. Aus dem gleichen Grunde ist auch der Vorbunker vor der Wanne vollkommen geschlossen, so daß keine Falschluft in den Abgasweg gelangen kann.

Die Lösung der weiteren Aufgabe erfolgt mit einer Vorrichtung mit den kennzeichnenden Merkmalen des Patentanspruches 12.

Durch mindestens einen langgestreckten, etwa waagerecht angeordneten Trog, eine an sich bekannte endlose Kratzerkette, die über mindestens zwei beabstandete Kettenräder, von denen mindestens eines antreibbar ist, so umläuft, daß mindestens ein Kratzerkettentrum etwa über die Längsausdehnung des Troges gleitend in Eingriff bringbar ist und Mittel zur Erwärmung des in dem Trog geförderten Gutes wird eine einfache und wirtschaftliche Vorrichtung geschaffen.

Ein Vorteil der Vorrichtung ist, daß sich die Haupterstreckung in der Waagerechten befindet, so daß sie parallel zu bestehenden Gemengevorbunkern eingesetzt und damit in bestehende Glashütten integriert werden kann. Ersichtlicherweise kann eine solche Vorrichtung entsprechend der verlangten Kapazität gebaut werden.

Vorteilhaft ist vorgesehen, daß die Kratzerkette eine an sich bekannte Einstrang-Gabellaschenkette mit sich von der Gabellaschenkette quer erstreckenden, leicht angewinkelten Mitnehmern aus Flachstahl ist.

Derartige Kratzerketten haben sich als robust, verschleißarm und nahezu wartungsfrei erwiesen. Unter Wärmeeinfluß können sie sich nicht verziehen, da sie nur einen, mittig angeordneten Strang aufweisen.

Zweckmäßig sind die Kettenräder zweiteilig und weisen gehärtete Oberflächen auf, was zur Wartungsfreundlichkeit und Betriebssicherheit der Vorrichtung beiträgt.

Vorteilhaft weist der Trog ein Gehäuse mit einem Mantel mit Innenwand und Außenwand auf und der Raum zwischen Innenwand und Außenwand weist eine Eintrittsöffnung und eine Austrittsöffnung für den zweiten Gasstrom auf, und die Außenwand weist eine wärmeisolierende Beschichtung auf.

Dadurch wird ein guter Schutz gegen Wärmeverlust erreicht.

In einer Ausgestaltung ist vorgesehen, daß mindestens ein weiterer Trog parallel beabstandet über dem ersten Trog angeordnet ist und daß der weitere Trog eine eigene Kratzerkette besitzt, welche über das gleiche Getriebe wie die erste Kete angetrieben wird.

Dadurch ist es möglich, daß die Vorrichtung in der Form dem vorhandenen Platz in einer bestehenden Glashütte angepaßt werden kann.

Zweckmäßig stützt sich der mindestens eine weitere Trog auf einen Zwischenboden ab, der in dem Gehäuse angeordnet ist, wobei vorteilhaft der Zwischenboden hohl ausgebildet ist und der zweite Gasstrom durch den Hohlraum leitbar ist.

Dadurch ist das Gut von der Unterseite jedes Troges indirekt beheizbar.

Vorteilhafte Ausgestaltungen der erfindungsgemäßen Vorrichtung werden nunmehr anhand einer Zeichnung näher erläutert. Sie zeigt in
- Figur 1: einen Längsschnitt durch eine Vorrichtung mit zwei übereinander angeordneten Trögen, in
- Figur 2: einen Querschnitt entlang der Linie B - B in Figur 1, in
- Figur 3: einen Längsschnitt durch eine Vorrichtung mit einem Trog, in
- Figur 4: einen Querschnitt entlang der Linie A - A in Figur 3, in
- Figur 5: einen Längsschnitt durch eine Vorrichtung mit einer Vielzahl von Trögen, und in
- Figur 6: einen Querschnitt entlang der Linie C - C in Figur 6.

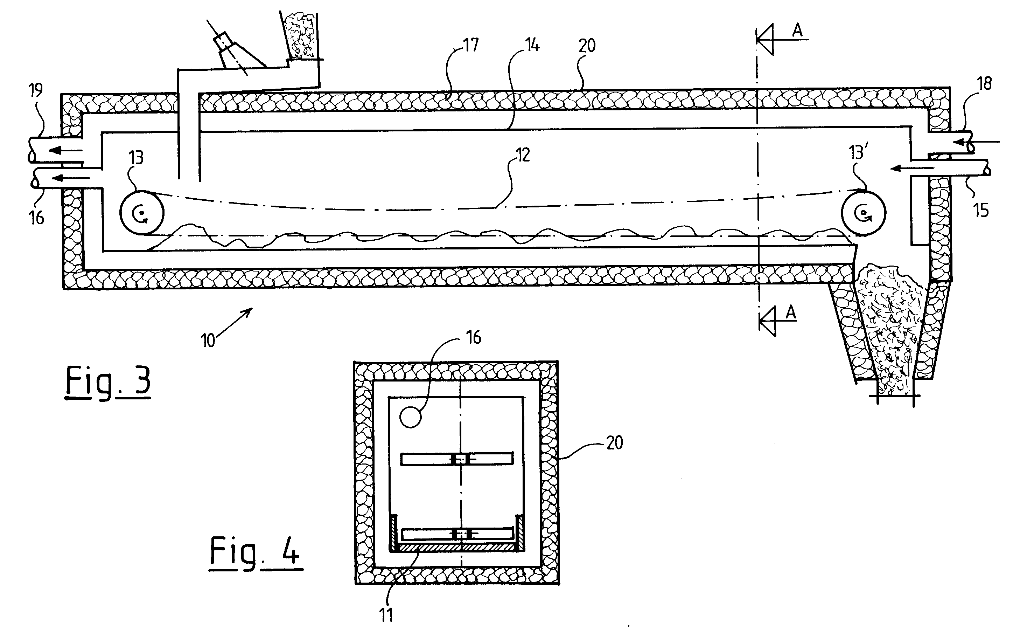

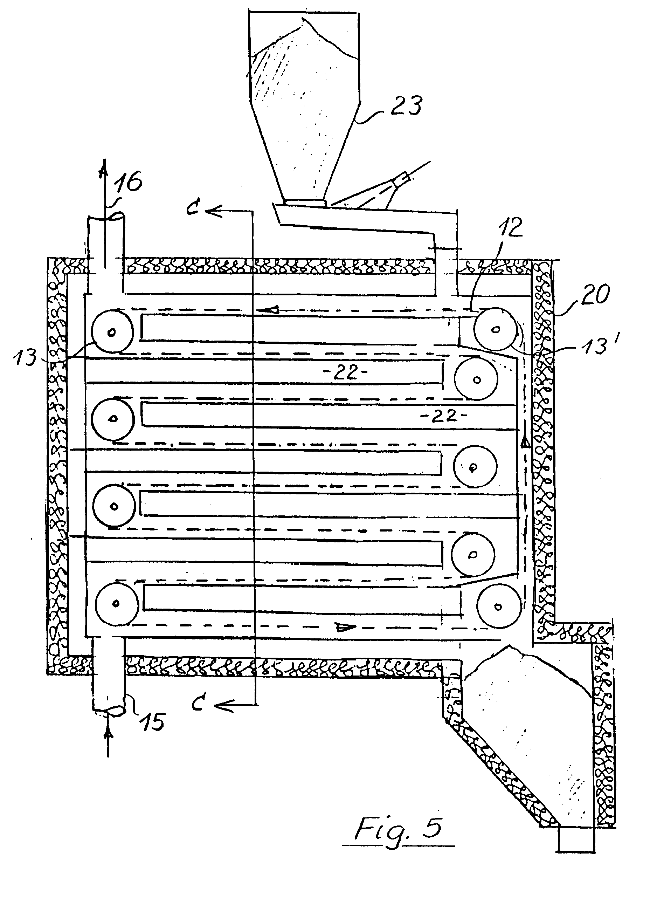

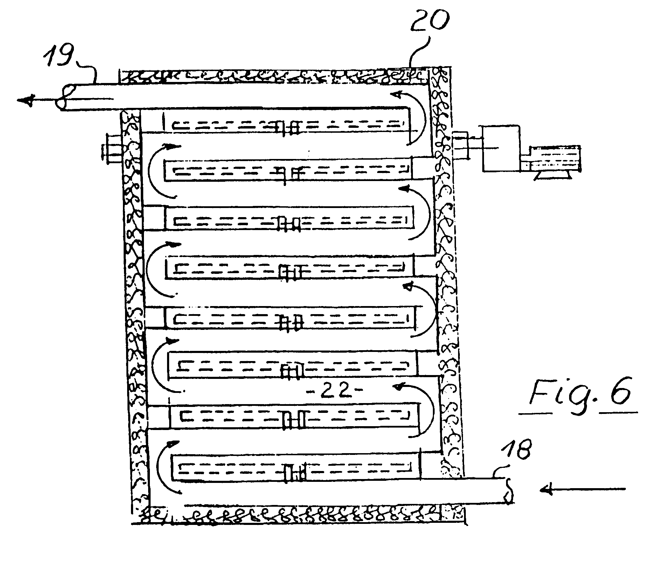

Mit Bezugnahme auf Figur 3 weist eine erfindungsgemäße Vorrichtung 10 einen langgestreckten Trog 11 auf (Figur 4), über den eine Kratzerkette 12, die über zwei Kettenräder 13, 13' geführt ist, hinweggleitet.

Unter dem unteren Trum der Kratzerkette 12 ist das zu fördernde Gut angedeutet.

Das Gut wird durch die Bewegung der Kratzerkette 12 von der linken Seite der Figur 3, in der eine von oben auf den Trog führende Gutzuleitung angedeutet ist, auf die rechte Seite der Figur 3 gefördert, wo etwa unterhalb des Kettenrades 13' eine Gutabführung gezeigt ist.

Die Kratzerkette 12 und der Trog 11 sind von einer Gehäuseinnenwand 14 umgeben, die auf der rechten Seite der Figur 3 eine Eintrittsöffnung 15 für einen ersten Gasstrom zur direkten Beheizung aufweist.

Auf der linken Seite der Figur 3 befindet sich eine Austrittsöffnung 16 zur Abführung des ersten Gasstromes.

Die Innenwand 14 ist von einer Außenwand 17 umgeben derart, daß sich zwischen den Wänden 14 und 17 ein Hohlraum bildet, in den durch eine Austrittsöffnung 18 (Figur 3 rechts) ein zweiter Gasstrom eintritt.

Dieser zweite Gasstrom verläßt den Raum zwischen Innenwand 14 und Außenwand 17 durch eine der Eintrittsöffnung 18 gegenüberliegenden Austrittsöffnung 19.

Die Außenwand 17 ist von einer wärmeisolierenden Beschichtung 20 umgeben.

Figur 4 zeigt an der Kratzerkette 12 seitlich sich erstreckende Mitnehmer 12'.

Weiter ist in Figur 4 die Austrittsöffnung 16 und besonders deutlich der Trog 11 erkennbar.

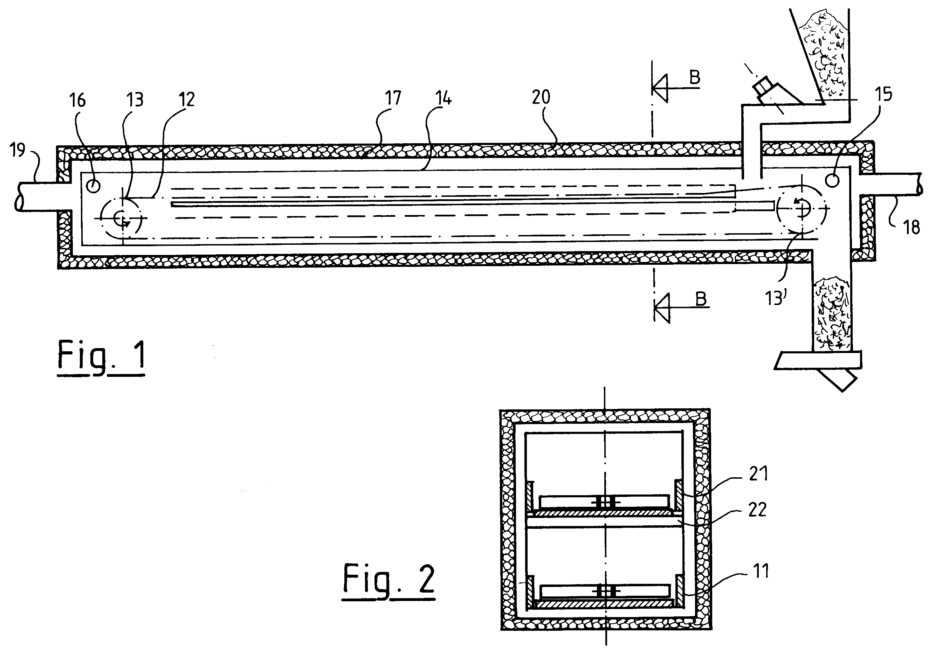

Figur 1 zeigt eine weitere Ausgestaltung der Vorrichtung mit zwei übereinander angeordneten Trögen, von denen (Figur 2) der untere mit 11 und der darüberliegende mit 21 bezeichnet ist.

Die Bauteile in Figur 1 entsprechen weitgehend denen in Figur 3 und tragen deswegen gleiche Bezugszahlen. Abweichend von der Figur 3 sind in der gezeigten Ausgestaltung die Eintrittsöffnung 15 und die Austrittsöffnung 16 senkrecht zur Zeichenebene ausgeführt.

Bei der gezeigten Ausführung ist ein unterhalb des Troges 21 angeordneter Zwischenboden 22 so ausgeführt, daß die rücklaufende Kratzerkette 12, welche außen über Kettenräder 13, 13' mit Spannstationen (nicht gezeigt) geführt ist, wiederum auf eine in der Mitte des Troges 21 liegenden Fläche aufliegt, so daß das zu fördernde Gut zunächst von der Abwurfstelle (Figur 1 rechts) weg bewegt wird, dann auf dem Boden des Troges 11 zur Auslaufstelle hin befördert wird. Dadurch verlängert sich der Weg des Gutes, so daß auf relativ kleinem Raum eine große Wärmeübergangsfläche entsteht.

Figur 5 zeigt eine noch weitere Ausgestaltung mit einer Vielzahl übereinander angeordneter Zwischenböden 22, auf denen jeweils ein weiterer Trog 21 (nicht dargestellt) angeordnet ist.

Die Eintrittsöffnung 15 für die direkte Heizung befindet sich in Figur 5 unten, und die Austrittsöffnung 16 befindet sich oben. Auch ist in Figur 5 ein Zwischenbunker 23 angedeutet, über den oben in die Vorrichtung das Gut über eine nach rechts weisende Förderrinne zugeführt wird.

Figur 6 zeigt im Querschnitt die Abgasführung des zweiten Gasstromes zur indirekten Beheizung durch eine Eintrittsöffnung 18 (rechts unten) und aus einer Austrittsöffnung 19 (links oben).

## Patentansprüche

1. Verfahren zum Vorwärmen von einem Gemenge zur Glaserzeugung, insbesondere in Mischung mit Glasscherben,
**dadurch gekennzeichnet**,
daß mindestens ein langgestreckter, etwa waagerecht angeordneter Trog (11, 21) vorgesehen wird, daß das Gut auf ein Ende des Troges gegeben wird, in dem eine an sich bekannte endlose Kratzerkette (12) über mindestens zwei beabstandete Kettenräder (13, 13'), von denen mindestens eines antreibbar ist, so umläuft, daß mindestens ein Kratzerkettentrum etwa über die Längsausdehnung des Troges (11, 21) gleitet, daß das Gut von dem Kratzerkettentrum entlang der Längsausdehnung des Troges zu dessen anderen Ende gefördert und aus dem Trog abgeführt wird, und daß das Gut bei der Förderung in dem Trog (11, 21) erwärmt wird.

2. Verfahren nach Anspruch 1, dadurch gekennzeichnet, daß das Gut durch einen ersten Gasstrom direkt erwärmt wird.

3. Verfahren nach Anspruch 2, dadurch gekennzeichnet, daß das Gut durch einen Abgasstrom aus einem Glasschmelzofen erwärmt wird.

4. Verfahren nach Anspruch 3, dadurch gekennzeichnet, daß das Gut durch einen Abgasstrom aus einem stromabwärts von dem Glasschmelzofen angeordneten Wärmetauscher im Gegenstrom erwärmt wird.

5. Verfahren nach einem der Ansprüche 2 bis 4, dadurch gekennzeichnet, daß man den Trog mit einem Gehäuse umgibt, das eine Eintritts- (15) und eine Austrittsöffnung (16) für den Gasstrom aufweist.

6. Verfahren nach Anspruch 5, dadurch gekennzeichnet, daß man das Gehäuse mit einem Mantel mit einer Innenwand (14) und einer Außenwand (17) ausführt, und daß man einen zweiten Gasstrom zwischen der Innenwand (14) und der Außenwand (17) leitet zur indirekten Erwärmung des Gutes.

7. Verfahren nach Anspruch 6, dadurch gekennzeichnet, daß man den Abgasstrom aus einem Glasschmelzofen zwischen Innenwand (14) und Außenwand (17) leitet.

8. Verfahren nach Anspruch 7, dadurch gekennzeichnet, daß man einen Abgasstrom aus einem stromabwärts vom Glasschmelzofen angeordneten Wärmetauscher derart zwischen Innenwand und Außenwand leitet, daß der Abgasstrom im Kreuzgegenstrom zu der Bewegung des Gutes verläuft.

9. Verfahren nach einem der Ansprüche 6 bis 8, dadurch gekennzeichnet, daß man das Volumenverhältnis zwischen erstem und zweiten Gasstrom so einstellt, daß die Verstaubung in direktem Kontakt mit dem Gut minimiert wird.

10. Verfahren nach einem der vorangegangenen Ansprüche, dadurch gekennzeichnet, daß man die Geschwindigkeit der Kratzerkette (12) in Abhängigkeit von der Durchsatzmenge einstellt.

11. Verfahren nach einem der vorangegangenen Ansprüche, dadurch gekennzeichnet, daß man das Gut aus einem Zwischenbunker (23) über eine geschlossene Vibrationsrinne auf das eine Ende des Troges (11, 21) gibt.

12. Vorrichtung zur Durchführung des Verfahrens nach mindestens einem der vorangegangenen Ansprüche, gekennzeichnet durch mindestens einen langgestreckten, etwa waagerecht angeordneten Trog (11, 21), eine an sich bekannte endlose Kratzerkette (12), die über mindestens zwei beabstandete Kettenräder (13, 13'), von denen mindestens eines antreibbar ist, so umläuft, daß mindestens ein Kratzerkettentrum etwa über die Längsausdehnung des Troges (11, 21) gleitend in Eingriff bringbar ist, und Mittel zur Erwärmung des in dem Trog (11, 21) geförderten Gutes.

13. Vorrichtung nach Anspruch 12, dadurch gekennzeichnet, daß die Kratzerkette (12) eine an sich bekannte Einstrang-Gabellaschenkette mit sich von der Gabellaschenkette quer erstreckenden, leicht angewinkelten Mitnehmern (12') aus Flachstahl ist.

14. Vorrichtung nach Anspruch 12 oder 13, dadurch gekennzeichnet, daß die Kettenräder (13, 13') zweiteilig sind und gehärtete Oberflächen aufweisen.

15. Vorrichtung nach einem der Ansprüche 12 bis 14, dadurch gekennzeichnet, daß sie ein Gehäuse mit einem Mantel mit Innenwand (14) und Außenwand (17) aufweist, daß der Raum zwischen Innenwand und Außenwand eine Eintrittsöffnung (18) und eine Austrittsöffnung (19) für den zweiten Gasstrom aufweist, und daß die Außenwand eine wärmeisolierende Beschichtung (20) aufweist.

16. Vorrichtung nach einem der Ansprüche 12 bis 15, dadurch gekennzeichnet, daß mindestens ein weiterer Trog (21) parallel beabstandet über dem ersten Trog (11) angeordnet ist, und daß der weitere Trog (21) eine eigene Kratzerkette besitzt, welche über das gleiche Getriebe wie die erste Kette angetrieben ist.

17. Vorrichtung nach Anspruch 16, dadurch gekennzeichnet, daß der mindestens eine weitere Trog (21) sich auf einem Zwischenboden (22) abstützt, der in dem Gehäuse angeordnet ist.

18. Vorrichtung nach Anspruch 17, dadurch gekennzeichnet, daß der Zwischenboden (22) hohl ausgebildet ist, und daß der zweite Gasstrom durch den Hohlraum leitbar ist.
